# EUROPEAN PATENT APPLICATION

(11) **EP 4 167 325 A1**
(43) Date of publication of application: **19.04.2023**
(21) Application number: 21933482.8
(22) Date of filing: 03.09.2021
(51) Int. Cl.: H01M 4/66

(54) **NEGATIVE CURRENT COLLECTOR AND SECONDARY BATTERY COMPRISING SAME, AND BATTERY MODULE, BATTERY PACK AND ELECTRIC DEVICE**

(71) Applicant: Contemporary Amperex Technology Co., Limited, Ningde City, Fujian 352100 (CN)
(72) Inventor: XUE, Yifan, Ningde Fujian 352100 (CN); YAO, Bin, Ningde Fujian 352100 (CN); WU, Yichen, Ningde Fujian 352100 (CN)
(74) Representative: Behr, Wolfgang
(86) International application number: PCT/CN2021/116532
(87) International publication number: WO 2023/029002

(57) **Abstract**

The present application provides a negative electrode current collector, a secondary battery containing the same, a battery module, a battery pack, and a power consumption apparatus. The negative electrode current collector includes a first metal layer, a prelithiation layer, and a second metal layer, where the prelithiation layer is disposed between the first metal layer and the second metal layer, and at least one of the first metal layer and the second metal layer has a porous structure. The negative electrode current collector provided by the embodiment of the present application could effectively prolong a cycle life of a battery while improving coulombic efficiency and energy density of a secondary battery.

## Description

### TECHNICAL FIELD

The present application relates to the field of battery technologies, and in particular, to a negative electrode current collector, a secondary battery containing the same, a battery module, a battery pack, and a power consumption apparatus.

### BACKGROUND

In recent years, secondary batteries have been widely used in energy storage power systems such as hydropower, firepower, wind power and solar power plants, as well as electric tools, electric bicycles, electric motorcycles, electric automobiles, military devices, aerospace and other fields. As secondary batteries have been greatly developed, higher demands have been placed on their energy density, cycle performance, or the like.

How to make the secondary battery take into account both higher energy density and better cycle performance is a technical problem to be solved urgently.

### SUMMARY

The present application is made in view of the foregoing technical problem, and an objective thereof is to provide a negative electrode current collector, which could effectively prolong a cycle life of a secondary battery while improving coulombic efficiency and energy density of the secondary battery.

In order to achieve the foregoing objective, the present application provides a negative electrode current collector, a secondary battery containing the same, a battery module, a battery pack, and a power consumption apparatus.

According to a first aspect, the present application provides a negative electrode current collector, including: a first metal layer, a prelithiation layer, and a second metal layer, where the prelithiation layer is disposed between the first metal layer and the second metal layer, and at least one of the first metal layer and the second metal layer has a porous structure.

In an embodiment of the present application, a negative electrode current collector has a composite sandwich structure of a metal layer-a prelithiation layer-a metal layer. On the one hand, at least one of the two metal layers has a porous structure, so that a negative active material disposed on a surface of the current collector can be in contact with the prelithiation layer, and the prelithiation layer can be used as a lithium source to pre-compensate for active lithium consumed by processes such as the formation of a negative electrode SEI (solid electrolyte interphase) film in the first cycle of the lithium-ion battery, thereby effectively improving the first-cycle coulombic efficiency of the battery. A gap left by the consumption of the lithium layer provides a space for volume expansion of the negative material during lithium intercalation, which can reduce fracture and polarization of graphite, and improve mechanical stability of the negative electrode and cycle performance. On the other hand, the special composite sandwich structure makes consumption of the prelithiation layer not affect the bonding strength between the negative electrode film layer and the current collector, that is, the negative electrode film layer is not removed from the negative electrode current collector due to the consumption of the prelithiation layer, without compromising the cycle life of the battery.

In any embodiment, the first metal layer and the second metal layer each have a porous structure.

When the first metal layer and the second metal layer each have a porous structure, the coulombic efficiency and energy density of the battery may be further improved.

In any embodiment, the first metal layer is connected to a first surface of the prelithiation layer, and the second metal layer is connected to a second surface of the prelithiation layer.

It should be understood that the prelithiation layer is disposed between the first metal layer and the second metal layer, and the prelithiation layer may be disposed in various manners. In one embodiment, the prelithiation layer has a first surface and a second surface opposite in a thickness direction, and the first metal layer and the second metal layer are connected or partially connected to the first surface and the second surface of the prelithiation layer, respectively. In another embodiment, the prelithiation layer is disposed between the first metal layer and the second metal layer by metal calendering. Preferably, the first metal layer and the second metal layer are fixedly connected to the first surface and the second surface of the prelithiation layer, respectively, in other words, the first metal layer and the second metal layer are in close contact with the first surface and the second surface of the prelithiation layer, respectively.

In any embodiment, an area of the first metal layer or the second metal layer is larger than an area of the prelithiation layer.

In any embodiment, a ratio of an area of the first metal layer to an area of the prelithiation layer is greater than or equal to 1.1.

In any embodiment, a ratio of an area of the second metal layer to an area of the prelithiation layer is greater than or equal to 1.1.

In an embodiment of the present application, through structural design, an area of the metal layer in the negative electrode current collector is larger than an area of the prelithiation layer, and the metal layer partially or completely covers the prelithiation layer. Therefore, the exposed area of the prelithiation layer at a solid-liquid interface of the electrode/electrolytic solution is reduced or the direct exposure of the prelithiation layer is avoided, thereby effectively suppressing or avoiding the formation of lithium dendrites on the prelithiation layer, reducing the safety risk, and the waste of the lithium source, improving the prelithiation effect, and further improving the coulombic efficiency of the secondary battery.

In any embodiment, an area of the first metal layer is equal to an area of the second metal layer.

In an embodiment of the present application, a first metal layer and a second metal layer with the same area are used. The first metal layer and the second metal layer with the same area are adopted, which facilitates industrial processing and improves the production efficiency of the secondary battery.

In any embodiment, the prelithiation layer is a lithium foil.

In an embodiment of the present application, a lithium foil is used as the prelithiation layer, no other binders or adhesives are required, and the lithium foil may be used to obtain a negative electrode current collector with the foregoing composite sandwich structure by a calendering process. The process is simple and the lithium metal is in direct contact with the current collector and the active material, facilitating the transfer of electrons in the electrochemical reaction, shortening the mass transfer distance of lithium ions, and improving the charging and discharging efficiency of the secondary battery.

In any embodiment, the prelithiation layer is lithium metal powder.

In any embodiment, the prelithiation layer is lithium silicide powder.

In any embodiment, an oxidation- reduction potential of the first metal layer and the second metal layer is greater than or equal to 0.337V

In any embodiment, the first metal layer and/or the second metal layer is a metallic copper material.

It should be understood that materials of the first metal layer and the second metal layer may be the same or different. Preferably, the first metal layer and the second metal layer are of the same the material.

In any embodiment, the first metal layer and/or the second metal layer is a porous copper foil.

In any embodiment, a pore in the porous copper foil has a pore size of 15-500µm, preferably 20-100µm.

In any embodiment, the porous copper foil has a porosity less than or equal to 50%.

In any embodiment, the porous copper foil has a thickness of 2.5-6µm, preferably 2.5-4µm.

In any embodiment, the first metal layer and/or the second metal layer is copper foam.

It should be understood that structures of the first metal layer and the second metal layer may be the same or different. Illustratively, the first metal layer is a porous copper foil, and the second metal layer is a copper foam. Preferably, the first metal layer and the second metal layer use materials of the same structure.

In any embodiment, a pore in the copper foam has a pore size of 0.3-7mm.

In any embodiment, the copper foam has a porosity greater than or equal to 50%, optionally 50%-80%.

In any embodiment, the copper foam has a thickness of 0.8-10mm.

In any embodiment, the first metal layer and/or the second metal layer is a copper wire with a mesh structure.

In any embodiment, the copper wire has a diameter of 0.02-2mm.

In any embodiment, the first metal layer and/or the second metal layer is a metallic nickel material.

In any embodiment, the first metal layer and/or the second metal layer is a stainless steel material.

In a second aspect, the present application provides a secondary battery, including a negative electrode sheet, the negative electrode sheet including the negative electrode current collector according to the first aspect of the present application.

In a third aspect, the present application also provides a battery module, including the secondary battery according to the second aspect of the present application.

In a fourth aspect, the present application also provides a battery pack, including one of the secondary battery according to the second aspect of the present application, and the battery module according to the third aspect of the present application.

In a fifth aspect, the present application also provides a power consuming apparatus, includincluding at least one of the secondary battery according to the second aspect of the present application, the battery module according to the third aspect of the present application, and the battery pack according to the fourth aspect of the present application.

A negative electrode current collector provided by the present application has a composite sandwich structure composed of a metal layer-a prelithiation layer-a metal layer, which can provide a sufficient lithium source for a negative active material through a porous structure of the metal layer without exposing the prelithiation layer to an electrode/electrolytic solution, so as to supplement active lithium ions consumed by the negative electrode during the formation of the SEI film and the battery cycle. Thus the first-cycle coulombic efficiency of the battery is effectively improved, the energy density of the battery is enhanced, and the cycle life of the battery is prolonged.

### BRIEF DESCRIPTION OF THE DRAWINGS

In order to illustrate technical solutions in embodiments of the present application more clearly, brief description will be made below to accompanying drawings required in the embodiments of the present application. Apparently, the accompanying drawings described below are some embodiments of the present application only, and other drawings could be obtained based on these accompanying drawings by persons of ordinary skilled in this art without creative efforts. In the accompanying drawings, the drawings are not drawn to actual scale.
FIG. 1a is a schematic diagram of a negative electrode current collector of the present application.
FIG. 1b is a schematic diagram of a negative electrode current collector provided with an active material of the present application.
FIG. 2a is a schematic diagram of another negative electrode current collector of the present application.
FIG. 2b is a schematic diagram of another negative electrode current collector provided with an active material of the present application.
FIG. 3 is a schematic flowchart for preparing a negative electrode current collector of the present application.
FIG. 4a is a schematic diagram of yet another negative electrode current collector of the present application.
FIG. 4b is a schematic diagram of still another negative electrode current collector of the present application.
FIG. 5 is a schematic structural diagram of a secondary battery of the present application.
FIG. 6 is a schematic diagram of a secondary battery with a square structure of the present application.
FIG. 7 is a schematic diagram of a battery module of the present application.
FIG. 8 is a schematic diagram of a battery pack of the present application.
FIG. 9 is an exploded view of a battery pack of the present application.

### DESCRIPTION OF EMBODIMENTS

Hereinafter, embodiments that specifically disclose a negative electrode current collector, a secondary battery containing the same, a battery module, and a power consumption apparatus of the present application will be described in detail with reference to the accompanying drawings as appropriate. However, unnecessarily detailed descriptions may be omitted in some cases. For example, detailed descriptions of well-known matters and repeated descriptions of practically identical structures are omitted. This is done to avoid unnecessarily redundant descriptions for ease of understanding by persons skilled in the art. In addition, the drawings and the following description are provided for a full understanding of the present application by persons skilled in the art, and are not intended to limit the subject matter in the claims.

A "range" disclosed herein is defined in the form of a lower limit and an upper limit. A given range is defined by selecting a lower limit and an upper limit, and the selected lower limit and upper limit define a boundary of a particular range. The range defined in this manner may or may not include end values, and may be combined arbitrarily, that is, any lower limit may be combined with any upper limit to form a range. For example, if ranges of 60-120 and 80-110 are listed for a particular parameter, it is understood that ranges of 60-110 and 80-120 are also contemplated. In addition, if the minimum range values listed are 1 and 2, and the maximum range values listed are 3, 4 and 5, all the following ranges are contemplated: 1-3, 1-4, 1-5, 2-3, 2-4, and 2-5. In the present application, unless otherwise specified, a numerical range "a-b" represents an abbreviated representation of any combination of real numbers between a and b, where both a and b are real numbers. For example, a numerical range "0-5" means that all real numbers between "0-5" have been listed herein, and "0-5" is just an abbreviated representation of a combination of these numerical values. In addition, when a certain parameter is expressed as an integer ≥2, it is equivalent to disclosing that the parameter is, for example, an integer of 2, 3, 4, 5, 6, 7, 8, 9, 10, 11, 12, or the like.

In the depiction of the present application, it should be noted that, unless otherwise illustrated, the meaning of "a plurality of" is two or more; and orientations or positional relationships indicated by terms such as "up", "down", "left", "right", "inside", and "outside" are merely for convenience of describing the present application and for simplifying the description, rather than for indicating or implying that an apparatus or element indicated must have a specific orientation, and must be constructed and operated in a specific orientation, which thus shall not be understood as limitation to the present application In addition, the terms such as "first", "second", and "third" are merely intended for the purpose of description, and shall not be understood as an indication or implication of relative importance. "Vertical" is not strictly vertical, but within the allowable range of error. "Parallel" is not strictly parallel, but within the allowable range of error.

The terms representing orientations in the following description are all directions shown in the drawings, and do not limit the specific structure of the present application. In the description of the present application, it should be further noted that, unless otherwise explicitly specified and defined, terms "installation", "interconnection", and "connection" should be understood in a broad sense; for example, they may be either a fixed connection, or a detachable connection, or an integrated connection; and they may be either a direct connection, or an indirect connection through an intermediate medium. Persons of ordinary skill in the art may appreciate the specific meanings of the foregoing terms in the present application according to specific conditions.

Unless otherwise specified, "comprising" and "containing" mentioned in the present application are open-ended or closed-ended. For example, the "comprising" and "containing" may mean that other components that are not listed may further be comprised or contained, or only listed components may be comprised or contained.

In the present application, unless otherwise specified, the term "or" is inclusive. For example, the phrase "A or B" means "A, B or both A and B". More particularly, a condition "A or B" is satisfied by any one of the following: A is true (or present) and B is false (or not present); A is false (or not present) and B is true (or present); or both A and B are true (or present).

Unless otherwise specified, all embodiments and optional embodiments of the present application may be combined with each other to form a new technical solution.

Unless otherwise specified, all technical features and optional technical features of the present application may be combined with each other to form a new technical solution.

Generally, a secondary battery includes a positive electrode sheet, a negative electrode sheet, an electrolyte, and a separator. During charging and discharging of a battery, active ions are intercalated and deintercalated back and forth between the positive electrode sheet and the negative electrode sheet. The electrolyte plays a role of conducting ions between the positive electrode sheet and the negative electrode sheet. The separator is disposed between the positive electrode sheet and the negative electrode sheet, which mainly plays the role of preventing a short circuit between the positive and negative electrodes while allowing ions to pass through.

In the present application, a lithium-ion battery is taken as an example, the lithium-ion battery is a typical secondary battery, and since it relies on chemical reaction of deintercalation of lithium ions between the positive and negative electrodes for charging and discharging, the lithium-ion battery is also referred to as a rocking chair battery. In the charging process of the lithium-ion battery, lithium ions are deintercalated from the positive electrode, move, and are intercalated into the negative electrode; and in the discharging process, lithium ions are deintercalated from the negative electrode, move, and are intercalated into the positive electrode.

In the electrochemical reaction of lithium-ion batteries, due to structural changes of the electrode materials in the process of lithiation and delithiation, side reactions of the active material and other factors, the lithium ions deintercalated from the positive electrode materials can not completely return to the positive electrode, which results in the capacity loss of lithium-ion batteries, the decrease of coulombic efficiency, and the development of high energy density lithium-ion batteries is limited.

For the negative electrode material, the formation of SEI (Solid electrolyte interphase) film is one of the main reasons that the first discharge capacity of the negative electrode is less than the charge capacity.

It should be understood that processes of "lithiation" and "intercalation" described in the present application refer to processes in which lithium ions are intercalated in the positive material and the negative material due to electrochemical reactions, and processes of "deintercalated", "delithiation" and " deintercalation" described in the present application refer to processes in which lithium ions are deintercalated from the positive material and the negative material due to electrochemical reaction.

### [Negative Electrode Sheet]

A negative electrode sheet generally includes a negative electrode current collector and a negative electrode film layer disposed on at least one surface of the negative electrode current collector, and the negative electrode film layer includes a negative active material.

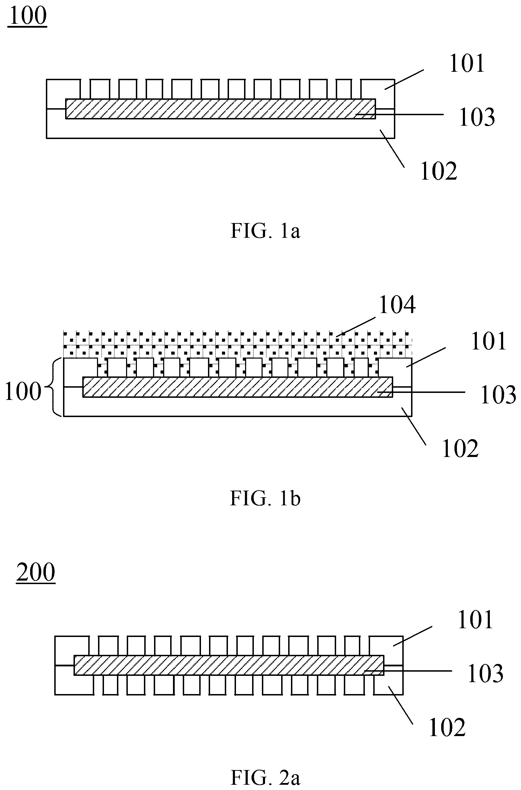

The negative electrode current collector of the present application solves the problems of low coulombic efficiency and short service life of the battery due to irreversible consumption of lithium ions in the secondary battery by means of a special structural design. A composite sandwich structure of a metal layer-a prelithiation layer-a metal layer is used as the negative electrode current collector of the secondary battery, which can prolong the cycle life of the battery while improving the energy density and Coulombic efficiency of the secondary battery. Specifically, in one embodiment, as shown in FIG. 1a, a negative electrode current collector 100 includes:
a first metal layer 101, a prelithiation layer 103, and a second metal layer 102.

The prelithiation layer 103 is configured to supplement lithium ions for an active material disposed on a surface of the negative electrode current collector in an electrochemical reaction of a lithium-ion battery, and the prelithiation layer 103 is disposed between the first metal layer 101 and the second metal layer 102, and at least one of the first metal layer 101 and the second metal layer 102 has a porous structure.

In this embodiment, the first metal layer, the prelithiation layer, and the second metal layer form a special composite sandwich structure. The negative active material is disposed on a surface of the current collector, that is, a surface of the metal layer, and at least one of the two metal layers has a porous structure, so that the active material disposed on the surface of the current collector can be in contact with the prelithiation layer through the porous structure, and the prelithiation layer can be used as a lithium source to supplement the active lithium consumed during the formation of the SEI film and the cycle of the battery, thereby effectively improving the first-cycle coulombic efficiency of the secondary battery. In addition, the special composite sandwich structure makes the consumption of the prelithiation layer not affect the structure between the active material and the current collector, that is, the active material is not removed from the negative electrode current collector due to the consumption of the prelithiation layer, and the cycle life of the battery is prolonged. In addition, when the prelithiation layer is completely consumed, as for the negative electrode current collector, a hollow structure composed of the two metal layers is formed. On the one hand, it can improve the problem of performance degradation of the battery due to volume expansion caused by the accumulation of by-products at the electrodes during the cycle of the battery. On the other hand, it can also provide a space for expansion due to structural change of the active material during the cycle of the battery, to solve the problem of deterioration of kinetic performance of the battery caused by the expansion of the active material, and to further prolong the cycle life of the battery.

In the negative electrode current collector of the present application, at least one of the first metal layer 101 or the second metal layer 102 has a porous structure.

In some embodiments, the first metal layer 101 and the second metal layer 102 each have a porous structure. When the first metal layer and the second metal layer each have a porous structure, both faces of the negative electrode current collector may be in contact with the negative active material through the porous structure, which increases the contact area between the prelithiation layer and the negative active material, and further improves the coulombic efficiency of the lithium-ion battery. The active materials may be disposed on both faces of the negative electrode current collector, and therefore the active materials on both faces may participate in the reaction of the lithium-ion battery, which effectively improves the energy density of the lithium-ion battery.

It should be understood that the negative active material is in contact with the prelithiation layer through a metal layer having a porous structure.

The prelithiation layer 103 has a first surface and a second surface opposite in its own thickness direction.

Optionally, in one embodiment, the first metal layer 101 is connected to a first surface of the prelithiation layer 103, and the second metal layer 102 is connected or partially connected to a second surface of prelithiation layer 103.

Specifically, calendering and other processes may be performed on the first metal layer, the prelithiation layer, and the second metal layer, such that the first surface and the second surface of the prelithiation layer are connected or partially connected to the first metal layer and the second metal layer, respectively.

Optionally, in one embodiment, the prelithiation layer 103 is disposed between the first metal layer 101 and the second metal layer 102 by a binder.

It should be understood that the prelithiation layer may be disposed between the first metal layer and the second metal layer in various ways, preferably, the first metal layer 101 and the second metal layer 102 are fixedly connected to the first surface and the second surface of the prelithiation layer 103, respectively. In other words, the first metal layer 101 and the second metal layer 102 are in close contact with the first surface and the second surface of the prelithiation layer 103, respectively.

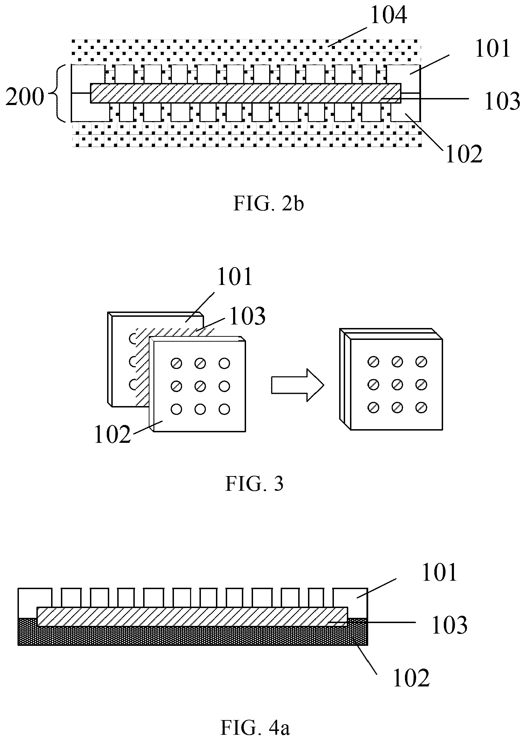

Optionally, as shown in FIG. 2a., in one embodiment, a first metal layer 101 and a second metal layer 102 each have a porous structure. A negative electrode current collector 200 having a double-face porous structure is provided with an active material thereon. Preferably, as shown in FIG. 2b, a first metal layer 101 and a second metal layer 102 of a negative electrode current collector 200 that each have a porous structure are provided with an active material thereon.

In this embodiment, the negative electrode current collector has two metal layers with the porous structure, so that both faces of the negative electrode current collector may be in contact with the active material through the porous structure, which increases the contact area between the prelithiation layer and the active material, and further improves the coulombic efficiency of the secondary battery. The active materials may be disposed on both faces of the negative electrode current collector, and the active materials on both faces may participate in the reaction of the battery, which effectively improves the energy density of the secondary battery.

Optionally, in one embodiment, an area of the first metal layer 101 and/or an area of the second metal layer 102 is larger than an area of the prelithiation layer 103. Specifically, a ratio of the area of the first metal layer 101 to the area of the prelithiation layer 103 is greater than or equal to 1.1; and/or a ratio of the area of the second metal layer 102 to the area of the prelithiation layer 103 is greater than or equal to 1.1.

In an embodiment of the present application, through structural design, an area of the metal layer in the negative electrode current collector is larger than an area of the prelithiation layer, and the metal layer partially or completely covers the prelithiation layer, and can be closed at the edge of the prelithiation layer so as to wrap the prelithiation layer. Therefore, the exposed area of the prelithiation layer at a solid-liquid interface of the electrode/electrolytic solution is reduced, or the direct exposure of the prelithiation layer is avoided, thereby effectively suppressing or avoiding the formation of lithium dendrites on the prelithiation layer, reducing the waste of the lithium source, improving the prelithiation effect, and further improving the coulombic efficiency of the secondary battery.

Optionally, in one embodiment, the first metal layer 101 has a first region and a second region, and the second metal layer 102 has a first region and a second region, where the first region of the first metal layer 101 is connected to the first surface of the prelithiation layer 103, the first region of the second metal layer 102 is connected to the second surface of the prelithiation layer 103, and the second region of the first metal layer 101 is connected to the second region of the second metal layer 102.

Preferably, in one embodiment, the second region of the first metal layer 101 surrounds the first region of the first metal layer 101; and the second region of the second metal layer 102 surrounds the first region of the second metal layer 102.

Optionally, in one embodiment, the area of the first metal layer 101 is equal to the area of the second metal layer 102.

In the embodiment of the present application, by using the first metal layer and the second metal layer with the same area, on the one hand, the area of the first metal layer and the area of the second metal layer are each greater than the area of the prelithiation layer, so that the prelithiation layer is completely covered, thereby avoiding the exposure of the prelithiation layer to the solid-liquid interface of the electrode/electrolytic solution, and improving the prelithiation effect. Meanwhile, on the other hand, the use of the first metal layer and the second metal layer with the same area is convenient for industrial processing and improves the production efficiency of the secondary battery.

Optionally, in one embodiment, the prelithiation layer 103 is a lithium foil.

Specifically, as shown in FIG. 3, FIG. 3 is a schematic flowchart for preparing a negative electrode current collector of an embodiment of the present application. A lithium foil is inserted into a first metal layer and a second metal layer, and the three are connected together by means of calendering, to obtain a composite sandwich structure of a metal layer-lithium foil-metal layer.

In an embodiment of the present application, a lithium foil is used as the prelithiation layer, no other binders or adhesives are required, and the lithium foil may be directly connected to the metal layer through a calendering process, to obtain a negative electrode current collector with the foregoing composite sandwich structure. The process is simple and the lithium metal is in direct contact with the current collector and the active material, facilitating the transfer of electrons in the electrochemical reaction, shortening the mass transfer distance of lithium ions, and improving the charging and discharging efficiency of the secondary battery.

Optionally, in one embodiment, the prelithiation layer 103 is lithium metal powder.

Optionally, in one embodiment, the prelithiation layer 103 is lithium silicide powder.

Specifically, the lithium metal powder or lithium silicide powder may be directly provided between the first metal layer 101 and the second metal layer 102, or may be provided between the first metal layer 101 and the second metal layer 102 through a binder and/or other adjuvants, which is not limited by the embodiment of the present application.

Optionally, in one embodiment, the prelithiation layer 103 is a lithium salt compound capable of providing lithium ions to the active material.

Optionally, in one embodiment, an oxidation-reduction potential of the first metal layer 101 and the second metal layer 102 is greater than or equal to 0.337V.

It should be understood that in the secondary battery, the negative electrode has a lower potential relative to the positive electrode. In this embodiment, a metal material with an oxidation-reduction potential greater than or equal to 0.377V is used as a current collector, which can maintain electrochemical stability at a low potential, that is, no oxidation-reduction reaction occurs at a low potential, and thus the electrochemical reaction of the battery is ensured to proceed normally.

Optionally, in one embodiment, the first metal layer 101 and/or the second metal layer 102 is a metallic copper material.

It should be understood that the materials of the first metal layer 101 and the second metal layer 102 may be the same or different. Preferably, the same material is used for the first metal layer 101 and the second metal layer 102.

Optionally, in one embodiment, the first metal layer 101 and/or the second metal layer 102 is a porous copper foil.

Optionally, in one embodiment, a pore in the porous copper foil has a pore size of 15-500µm, preferably 20-100µm.

Optionally, in one embodiment, the porous copper foil has a porosity of less than or equal to 50%.

Optionally, in one embodiment, the porous copper foil has a thickness of 2.5-6µm, preferably 2.5-4µm.

Optionally, in one embodiment, the first metal layer 101 and/or the second metal layer 102 is copper foam.

It should be understood that structures of the first metal layer 101 and the second metal layer 102 may be the same or different. Illustratively, the first metal layer 101 is a porous copper foil, and the second metal layer 102 is a copper foam. Preferably, the first metal layer 101 and the second metal layer 102 use materials of the same structure.

In this embodiment, copper foam is used as a metal layer material of the negative electrode current collector, and the copper foam has a larger specific surface area, and can support more active materials than planar materials, so as to provide more active materials for the electrochemical reaction of the secondary battery, which further improves the energy density of the secondary battery.

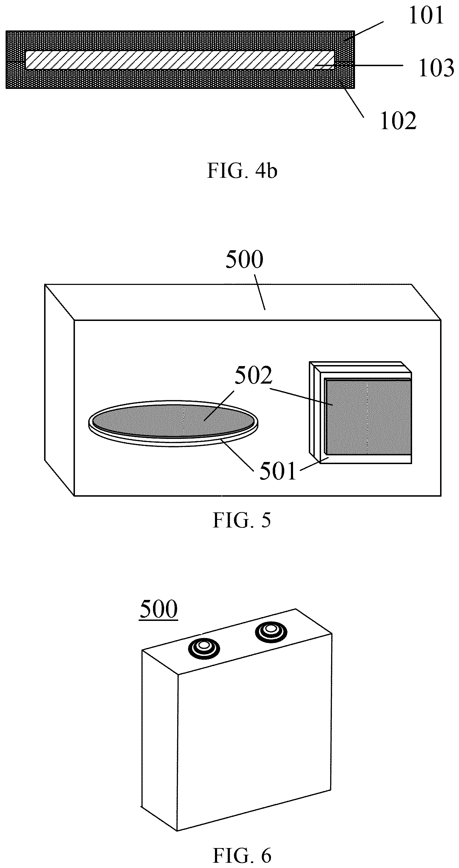

FIG. 4a is a schematic diagram of yet another negative electrode current collector 401 of an embodiment of the present application. FIG.4b is a schematic diagram of still another negative electrode current collector 402 of an embodiment of the present application.

Illustratively, in FIG. 4a, a first metal layer 101 of the negative electrode current collector 401 is a porous copper foil, and a second metal layer 102 is a copper foam. In FIG. 4b, a first metal layer 101 and a second metal layer 102 of the negative electrode current collector both 402 are copper foam.

Optionally, in one embodiment, a pore in the copper foam has a pore size of 0.3-7mm.

Optionally, in one embodiment, the copper foam has a porosity of 50-80%.

Optionally, in one embodiment, the copper foam has a thickness of 0.8-10mm.

Optionally, in one embodiment, the first metal layer 101 and/or the second metal layer 102 is a copper wire with a mesh structure.

Optionally, in one embodiment, the copper wire has a diameter of 0.02-2mm.

Optionally, in one embodiment, the first metal layer 101 and/or the second metal layer 102 is a metallic nickel material.

Optionally, in one embodiment, the first metal layer 101 and/or the second metal layer 102 is a stainless steel material.

Preferably, the first copper foil and the second copper foil have the same area, thickness, pore size, and porosity.

FIG. 5 shows a schematic structural diagram of a secondary battery of an embodiment of the present application.

As shown in FIG. 5, the present application also provides a secondary battery 500, including:
a negative electrode sheet 501 including the negative electrode current collector of any embodiment of the present application.

Optionally, in one embodiment, the negative electrode sheet 501 further includes:
an active material layer 502, the active material layer being disposed on a surface of the negative electrode current collector and being in contact with a prelithiation layer of the negative electrode current collector through a porous structure of the negative electrode current collector; and an area of the active material layer being larger than an area of the prelithiation layer.

The negative electrode film layer may be disposed on only one surface of the negative electrode current collector, or on both surfaces of the negative electrode current collector at the same time.

Optionally, in one embodiment, the negative active material may employ a negative active material for a battery known in the art. As an example, the negative active material may include at least one of artificial graphite, natural graphite, soft carbon, hard carbon, silicon-based materials, tin-based materials, lithium titanate, or the like. The silicon-based material may be selected from at least one of elemental silicon, silicon oxide compound, silicon-carbon composite, silicon-nitrogen composite, and silicon alloy. The tin-based material may be selected from at least one of elemental tin, tin oxide compound, and tin alloy. However, the present application is not limited to these materials, and other conventional materials that can be used as a negative active material for a battery may also be used. One type of these negative active materials may be used alone, or two or more types thereof may be used in combination.

As shown in FIG. 1b, it is a schematic diagram of a negative electrode current collector and an active material disposed thereon of an embodiment of the present application. Specifically, a negative active material and an additive form a negative electrode film layer and are coated on the negative electrode current collector 100, and thus a negative electrode film layer 104 is formed. Preferably, an active material is provided on the first metal layer 101 of the negative electrode current collector 100 that has a porous structure.

Optionally, in one embodiment, the negative electrode film layer further includes a binder. The binder may be selected from at least one of styrene-butadiene rubber (SBR), polyacrylic acid (PAA), polyacrylate sodium (PAAS), polyacrylamide (PAM), polyvinyl alcohol (PVA), sodium alginate (SA), polymethacrylic acid (PMAA), and carboxymethyl chitosan (CMCS).

Optionally, in one embodiment, the negative electrode film layer also includes a conductive agent. The conductive agent may be selected from at least one of superconducting carbon, acetylene black, carbon black, Ketjen black, carbon dots, carbon nanotubes, graphene, and carbon nanofibers.

Optionally, in one embodiment, the negative electrode film layer also optionally includes other adjuvants, for example, thickening agents (such as sodium carboxymethyl cellulose (CMC-Na)), or the like.

### [Positive Electrode Sheet]

A positive electrode sheet include a positive electrode current collector and a positive electrode film layer disposed on at least one surface of the positive electrode current collector, and the positive electrode film layer includes the positive active material of the first aspect of the present application.

As an example, the positive electrode current collector has two surfaces opposite in its own thickness direction, and the positive electrode film layer is disposed on either or both of the two opposite surfaces of the positive electrode current collector.

In some embodiments, the positive electrode current collector may be a metal foil or a composite current collector. For example, as the metal foil, an aluminum foil may be used. The composite current collector may include a polymer material base layer and a metal layer formed on at least one surface of the polymer material base layer. The composite current collector may be formed by synthesizing a metal material (aluminum, aluminum alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), polyethylene (PE), or the like).

In some embodiments, the positive active material may employ a positive active material for a battery known in the art. As an example, the positive active material may include at least one of the following materials: a lithium containing phosphate in an olivine structure, a lithium transition metal oxide and their respective modified compounds. However, the present application is not limited to these materials, and other conventional materials that can be used as a positive active material for a battery may also be used. One type of these positive active materials may be used alone, or two or more types thereof may be used in combination. Examples of the lithium transition metal oxide may include, but are not limited to, at least one of lithium cobalt oxide (such as LiCoO2), lithium nickel oxide (such as LiNiO2), lithium manganese oxide (such as LiMnO2, LiMn2O4), lithium nickel cobalt oxide, lithium manganese cobalt oxide, lithium nickel manganese oxide, lithium nickel cobalt manganese oxide (such as LiNi1/3Co1/3Mn1/3O2 (NCM333 for short), LiNi0.5Co0.2Mn0.3O2 (NCM523 for short), LiNi0.5Co0.25Mn0.25O2 (NCM211 for short), LiNi0.6Co0.2Mn0.202 (NCM622 for short), LiNi0.8Co0.1Mn0.1O2 (NCM811 for short)), lithium nickel cobalt aluminum oxide (such as LiNi0.85Co0.15A10.05O2), their modified compounds, or the like. Examples of the lithium containing phosphate in the olivine structure may include, but are not limited to, at least one of lithium iron phosphate (such as LiFePO4 (LFP for short)), composite materials of lithium iron phosphate and carbon, lithium manganese phosphate (such as LiMnPO4), composite materials of lithium manganese phosphate and carbon, lithium manganese iron phosphate, and composite materials of lithium manganese iron phosphate and carbon.

In some embodiments, the positive electrode film layer also optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluoroacrylate resin.

In some embodiments, the positive electrode film layer also optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode sheet may be prepared in the following manner. The foregoing components for preparing the positive electrode sheet such as the positive active material, the conductive agent, the binder, and any other components are dispersed in a solvent (such as N-methylpyrrolidone), to form a positive electrode slurry, the positive electrode slurry is coated on the positive electrode current collector, and then after drying, cold pressing and other processes are performed, a positive electrode sheet may be obtained.

### [Electrolyte]

The electrolyte plays the role of conducting ions between the positive electrode sheet and the negative electrode sheet. The type of the electrolyte is not specifically limited in the present application, and may be selected according to needs. For example, the electrolyte may be in a liquid state, gel state, or all solid state.

In some embodiments, the electrolyte is an electrolytic solution. The electrolytic solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalateborate, lithium bisoxalateborate, lithium difluorobisoxalate phosphate, and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and diethyl sulfone.

In some embodiments, the electrolytic solution also optionally includes an additive. For example, the additive may include a negative electrode film-forming additive, a positive electrode film-forming additive, and an additive capable of improving specific performance of the battery, for example, an additive for improving overcharge performance of the battery, or an additive for improving high-temperature or low-temperature performance of the battery, or the like.

### [Separator]

In some embodiments, a separator is further included in the secondary battery. The type of the separator is not particularly limited in the present application, and any well-known porous structure separator with good chemical stability and mechanical stability may be selected.

In some embodiments, the material of the separator may be selected from at least one of glass fiber, non-woven fabric, polyethylene, polypropylene, and polyvinylidene difluoride. The separator may be a single-layer film or a multi-layer composite film, which is not particularly limited. When the separator is a multi-layer composite film, the materials of each layer may be the same or different, which is not particularly limited.

In some embodiments, the positive electrode sheet, the negative electrode sheet, and the separator may be subject to a winding process or a lamination process, to obtain an electrode assembly.

In some embodiments, the secondary battery may include an outer package. The outer package may be used to package the foregoing electrode assembly and electrolyte.

In some embodiments, the outer package of the secondary battery may be a hard shell such as a hard plastic shell, an aluminum shell, or a steel shell. In some embodiments, the outer package of the battery cell may be a soft package, such as a bag-type soft package. A material of the soft package may be plastic, for example, polypropylene, polybutylene terephthalate, and polybutylene succinate.

The present application has no particular limitation on the shape of the secondary battery, which may be a cylinder, a square, or any other shape. For example, FIG. 6 shows a secondary battery 500 of a square structure as an example.

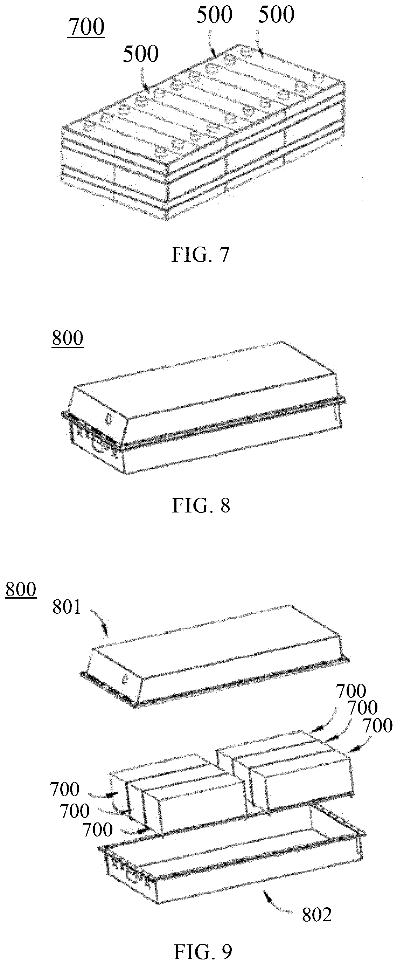

FIG. 7 shows a battery module 700 as an example. Referring to FIG. 7, in the battery module 700, a plurality of secondary batteries 500 may be sequentially arranged along a length direction of the battery module 700. Certainly, they may be arranged in accordance with any other manner. Further, the plurality of secondary batteries 500 may be fixed by using fasteners.

Optionally, the battery module 700 may further include a shell with an accommodating space, and the plurality of secondary batteries 500 are accommodated in the accommodating space.

In some embodiments, battery modules may be further assembled into a battery pack, and the number of battery modules included in the battery pack may be one or more, and the specific number may be selected by persons skilled in the art according to application and capacity of the battery pack.

FIG. 8 and FIG. 9 show a battery pack 800 as an example. Referring to FIG. 8 and FIG. 9, the battery pack 800 may include a battery box and a plurality of battery modules 700 disposed in the battery box. The battery box includes an upper box 801 and a lower box 802. The upper box 801 can cover the lower box 802 and form an enclosed space for accommodating the battery modules 700. The plurality of battery modules 700 may be arranged in the battery box in any manner.

In addition, the present application also provides a power consumption apparatus including at least one of a secondary battery, a battery module, or a battery pack provided by the present application. The secondary battery, the battery module, or the battery pack may be used as a power source for the power consumption apparatus as well as an energy storage unit for the power consumption apparatus. The power consumption apparatus may include a mobile device (for example, a mobile phone, a notebook computer), an electric vehicle (for example, a pure electric vehicle, a hybrid electric vehicle, a plug-in hybrid electric vehicle, an electric bicycle, an electric scooter, an electric golf cart, an electric truck), an electric train, a ship and a satellite, an energy storage system, or the like, but is not limited to this.

As the power consumption apparatus, a secondary battery, a battery module, or a battery pack may be selected according to usage requirements.

A power consumption apparatus is as an example. The power consumption apparatus is a pure electric vehicle, a hybrid electric vehicle, a plug-in hybrid electric vehicle, or the like. To meet a requirement of the power consumption apparatus for high power and high energy density of a secondary battery, a battery pack or a battery module may be used.

In another example, the apparatus may be a mobile phone, a tablet computer, a notebook computer, or the like. The apparatus usually requires lightness and thinness, and a secondary battery may be used as a power source.

Hereinafter, an embodiment of the present application will be described. The embodiments described below are illustrative, only used to explain the present application, and should not be construed as a limitation to the present application. Where specific techniques or conditions are not specified in the embodiments, they are performed according to techniques or conditions described in the literature in the art or according to product specifications. The reagents or instruments used without specifying the manufacturer are conventional products that can be obtained from the market.

### Embodiment 1-14

(1) Preparation of Negative Electrode Current Collector: Use a porous copper foil, a copper foam, and a copper wire as a first metal layer and a second metal layer, respectively, and perform calendering together with a lithium foil (a prelithiation layer), to obtain a negative electrode current collector with a composite sandwich structure as a current collector of a negative electrode of a secondary battery, where an area of the first metal layer is equal to an area of the second metal layer, and the area of the first metal layer and the area of the second metal layer both are greater than an area of the prelithiation layer, and a ratio of the area of the first metal layer or the area of the second metal layer to the area of the prelithiation layer is greater than or equal to 1.1. For example, side lengths of the square first and second metal layers with the same area are 5-10 mm longer than a side length of the square prelithiation layer. The specific parameters of the first metal layer and the second metal layer are shown in Table 1.

**Table 1**

| Embodi ment | First metal layer | | | | Prelit hiatio n layer | Second metal layer | | | | X/Y |
|---|---|---|---|---|---|---|---|---|---|---|
| | Mat erial | Pore size | Porosit y | Thick ness | Thick ness | Mat erial | Pore size | Porosity | Thick ness | |
| 1 | A | 40µm | 25% | 3.5µm | 3µm | A | 40µm | 25% | 3.5µm | 1.1 |
| 2 | A | 40µm | 25% | 3.5µm | 3µm | A | 40µm | 25% | 3.5µm | 1.15 |
| 3 | B | / | / | 1.5m m | 3µm | A | 40µm | 25% | 3.5µm | 1.1 |
| 4 | B | / | / | 1.5m m | 3µm | B | / | / | 1.5m m | 1.1 |
| 5 | C | 0.3mm | 50% | 0.8m m | 3µm | D | / | / | 6µm | 1.1 |
| 6 | C | 0.3mm | 50% | 0.8m m | 3µm | C | 0.3m m | 50% | 0.8m m | 1.1 |
| 7 | A | 40µm | 40% | 3.5µm | 3µm | A | 40µm | 25% | 3.5µm | 1.1 |
| 8 | A | 40µm | 40% | 3.5µm | 3µm | A | 40µm | 40% | 3.5µm | 1.1 |
| 9 | A | 80µm | 25% | 3.5µm | 3µm | A | 40µm | 25% | 3.5µm | 1.1 |
| 10 | A | 80µm | 25% | 3.5µm | 3µm | A | 80µm | 25% | 3.5µm | 1.1 |
| 11 | A | 40µm | 25% | 5µm | 3µm | A | 40µm | 25% | 3.5µm | 1.1 |
| 12 | A | 40µm | 25% | 5µm | 3µm | A | 40µm | 25% | 5µm | 1.1 |
| 13 | A | 40µm | 25% | 3.5µm | 2µm | A | 40µm | 25% | 3.5µm | 1.1 |
| 14 | A | 40µm | 25% | 3.5µm | 5µm | A | 40µm | 25% | 3.5µm | 1.1 |

In Table 1, A represents a porous copper foil, B represents a copper wire non-woven fabric, C represents copper foam, D represents a non-porous copper foil, and X/Y represents a ratio of an area of a first metal layer or an area of a second metal layer to an area of a prelithiation layer.

(2) Preparation of Negative Electrode Sheet: Mix artificial graphite as a negative active material, acetylene black as a conductive agent, styrene-butadiene rubber (SBR) as a binder, and sodium carboxymethyl cellulose (CMC-Na) as a thickening agent in a mass ratio of 96:1:1:1, then add deionized water as a solvent, and fully stir them according to a well-known method in the art, to obtain a negative electrode slurry; and evenly coat the negative electrode slurry on a copper foil of a negative electrode current collector, and dry it to obtain a negative electrode film layer, and then perform cold pressing, to obtain a negative electrode sheet.

(3) Preparation of Positive Electrode Sheet: Mix lithium iron phosphate as a positive active material, polyvinylidene fluoride as a binder, and acetylene black as a conductive agent in a mass ratio of 97:2:1, add N-methylpyrrolidone (NMP) as a solvent to adjust viscosity, and fully stir them according to a well-known method in the art, to obtain a positive electrode slurry; and evenly coat the positive electrode slurry on an aluminum foil of a positive electrode current collector, and dry it to obtain a positive electrode film layer, and then perform cold pressing, to obtain a positive electrode sheet.

(4) Preparation of Separator: Use a polyethylene (PE) film as a separator.

(5) Preparation of Electrolytic Solution: In an argon atmosphere glove box with water content less than 10ppm, uniformly mix ethylene carbonate (EC), dimethyl carbonate (DMC), and ethyl methyl carbonate (EMC) in a volume ratio of 30:40:3, to obtain an organic solvent, add vinylene carbonate (VC) with a mass fraction of 1%, and then uniformly dissolve 1mol/L of LiPF6 in the foregoing organic solvent, to obtain an electrolytic solution.

(6) Preparation of Secondary Battery: Stack a positive electrode sheet, a separator, and a negative electrode sheet in sequence, and perform winding, to obtain an electrode assembly; put the electrode assembly into an aluminum shell, weld a top cover, dry it and then inject an electrolytic solution, and perform processes such as standing, formation, sealing and welding, aging, and capacity, to obtain a secondary battery.

### Comparative Example 1

The preparation steps of Comparative Example 1 are the same as those of Embodiment 1, except that in step (1), a copper foil with a thickness of 6µm is used as the negative electrode current collector of the lithium-ion battery.

### Comparative Example 2

The preparation steps of Comparative Example 2 are the same as those of Embodiment 1, except that in step (1), the negative electrode current collector includes a first metal layer, and a porous copper foil is selected as the first metal layer, and a lithium foil is disposed on the first metal layer by a calendering process.

### Battery Performance Test

### 1. First-cycle Coulombic Efficiency

At 25° C, charge the secondary battery prepared in each Embodiment and Comparative Example at a constant current rate of 1C until a charge cutoff voltage V1, then charge it at a constant voltage until a current is equal to or less than 0.05C, and stand for 5 min; and perform discharging on the secondary battery prepared in each Example and Comparative Example at a constant current rate of 1C until a cutoff voltage V2, and stand for 5 min, which is the first charge-discharge cycle; and record the first-cycle charge capacity and the first-cycle discharge capacity, where the first-cycle coulombic efficiency is a ratio of the first-cycle discharge capacity to the first-cycle charge capacity, and test results are shown in Table 2.

### 2. Cycle Life Test

At 25°C, charge the secondary battery prepared in each Embodiment and Comparative Example at a constant current rate of 1C until a charge cutoff voltage V1, then charge it at a constant voltage until a current is equal to or less than 0.05C, and stand for 5 min; and then perform discharging at a constant current rate of 0.33C until a discharge cutoff voltage V2, and stand for 5min, which is a charge-discharge cycle; and according to this method, perform a cyclic charge/discharge test on the battery, until the battery capacity decays to 80%, where the number of cycles at this time is the cycle life of the battery, and test results are shown in Table 2.

**Table 2**

| | First-cycle coulombic efficiency | Cycle life (cycles) |
|---|---|---|
| Embodiment 1 | 99.80% | 5849 |
| Embodiment 2 | 99.76% | 5137 |
| Embodiment 3 | 98.90% | 4457 |
| Embodiment 4 | 97.20% | 4186 |
| Embodiment 5 | 98.50% | 4964 |
| Embodiment 6 | 99.10% | 4050 |
| Embodiment 7 | 99.84% | 4832 |
| Embodiment 8 | 99.84% | 4597 |
| Embodiment 9 | 99.60% | 4854 |
| Embodiment 10 | 99.41% | 4525 |
| Embodiment 11 | 99.74% | 5461 |
| Embodiment 12 | 99.53% | 5206 |
| Embodiment 13 | 98.26% | 4967 |
| Comparative example 1 | 93.00% | 2800 |
| Comparative example 2 | 95.30% | 4000 |

It can be seen from the foregoing performance test for the lithium-ion battery that the negative electrode current collector provided by the present application can effectively improve the first-cycle coulombic efficiency and cycle life of the lithium-ion battery.

It should be noted that the present application is not limited to the foregoing embodiments. The foregoing embodiments are merely examples, and embodiments having substantially the same constitution as the technical idea and exerting the same effects within the technical solution of the present application are all included within the technical scope of the present application. In addition, various modifications may be made to the embodiments by persons skilled in the art without departing from the spirit and scope of the present application, and other embodiments that are constructed by combining some of the constituent elements of the embodiments are also included in the scope of the present application.

## Claims

1. A negative electrode current collector, comprising:
a first metal layer, a prelithiation layer, and a second metal layer;
wherein the prelithiation layer is disposed between the first metal layer and the second metal layer, and at least one of the first metal layer and the second metal layer has a porous structure.

2. The negative electrode current collector according to claim 1, wherein the first metal layer and the second metal layer each have a porous structure.

3. The negative electrode current collector according to claim 1 or 2, wherein an area of the first metal layer or the second metal layer is larger than an area of the prelithiation layer;
optionally, a ratio of an area of the first metal layer to an area of the prelithiation layer is greater than or equal to 1.1; and
optionally, a ratio of an area of the second metal layer to an area of the prelithiation layer is greater than or equal to 1.1.

4. The negative electrode current collector according to claim 3, wherein an area of the first metal layer is equal to an area of the second metal layer.

5. The negative electrode current collector according to any one of claims 1 to 4, wherein the prelithiation layer is a lithium foil.

6. The negative electrode current collector according to any one of claims 1 to 4, wherein the prelithiation layer is lithium metal powder.

7. The negative electrode current collector according to any one of claims 1 to 4, wherein the prelithiation layer is lithium silicide powder.

8. The negative electrode current collector according to any one of claims 1 to 7, wherein an oxidation-reduction potential of the first metal layer and the second metal layer is greater than or equal to 0.337V.

9. The negative electrode current collector according to any one of claims 1 to 8, wherein the first metal layer and/or the second metal layer is a metallic copper material.

10. The negative electrode current collector according to claim 9, wherein the first metal layer and/or the second metal layer is a porous copper foil.

11. The negative electrode current collector according to claim 10, wherein a pore in the porous copper foil has a pore size of 15-500µm.

12. The negative electrode current collector according to claim 10, wherein the porous copper foil has a porosity less than or equal to 50%.

13. The negative electrode current collector according to claim 10, wherein the porous copper foil has a thickness of 2.5-6µm.

14. The negative electrode current collector according to any one of claims 1 to 13, wherein the first metal layer and/or the second metal layer is copper foam.

15. The negative electrode current collector according to claim 14, wherein a pore in the copper foam has a pore size of 0.3-7mm.

16. The negative electrode current collector according to claim 14, wherein the copper foam has a porosity greater than or equal to 50%, optionally 50%-80%.

17. The negative electrode current collector according to claim 14, wherein the copper foam has a thickness of 0.8-10mm.

18. The negative electrode current collector according to any one of claims 1 to 17, wherein the first metal layer and/or the second metal layer is a copper wire with a mesh structure.

19. The negative electrode current collector according to claim 18, wherein the copper wire has a diameter of 0.02-2mm.

20. The negative electrode current collector according to any one of claims 1 to 7, wherein the first metal layer and/or the second metal layer is a metallic nickel material.

21. The negative electrode current collector according to any one of claims 1 to 7, wherein the first metal layer and/or the second metal layer is a stainless steel material.

22. A secondary battery, comprising a negative electrode sheet, the negative electrode sheet comprising the negative electrode current collector of any one of claims 1 to 21.

23. The secondary battery according to claim 22, wherein the negative electrode sheet further comprises:
an active material layer, the active material layer being disposed on a surface of the negative electrode current collector and being in contact with a prelithiation layer of the negative electrode current collector through a porous structure of the negative electrode current collector; and an area of the active material layer being larger than an area of the prelithiation layer.

24. A battery module comprising the secondary battery according to claim 22 or 23.

25. A battery pack, comprising one of the secondary battery according to claim 22 or 23, and the battery module according to claim 24.

26. A power consumption apparatus, comprising at least one of the secondary battery according to claim 22 or 23, the battery module according to claim 24, and the battery pack according to claim 25.
